# EUROPÄISCHE PATENTANMELDUNG

(11) **EP 0 782 965 A1**
(43) Veröffentlichungstag der Anmeldung: **09.07.1997**
(21) Anmeldenummer: 97100044.3
(22) Anmeldetag: 03.01.1997
(51) Int. Cl.: B65D 85/57

(54) **Aus einem einstückigen Faltzuschnitt hergestellte Verpackung**

(30) Priorität: 05.01.1996 DE 29600165 U
(71) Anmelder: Fichter & Co. Verpackungen + Design GmbH, 72280 Dornstetten (DE)
(72) Erfinder: Bocksch, Christian, Dipl.-Kfm., 72119 Ammerbuch (DE)
(74) Vertreter: Patentanwälte Westphal, Buchner, Mussgnug Neunert, Göhring

(57) **Zusammenfassung**

Aus einem einstückigen Faltzuschnitt hergestellte Verpackung, insbesondere Verkaufs- und Archivierverpackung für CD's, mit einem Deckelfeld (103),einem Rückfelfeld (104), das mit dem Deckelfeld (103) über wenigstens eine Rillinie (204; 210) schwenkbar verbunden ist und einer mit einer Einschuböffnung versehenen Tasche (105, 106), die zwischen dem Deckelfeld (103) und dem Rückenfeld (104) angeordnet ist. Die Tasche ist aus einer vorderen Taschenplatte (105) und einer mit dieser über eine Rillinie (206) verbundenen hinteren Taschenplatte (106) gebildet, wobei die Einschuböffnung gegenüberliegend zu einer Rillinie (204; 210) angeordnet ist. Eine der beiden Taschenplatten (105; 106) ist mit dem Rückenfeld (104) über eine Rillinie (205; 211) schwenkbar verbunden. Die hintere Taschenplatte (106) und das Deckelfeld (103) sind über Kopplungsmittel (101, 109, 202) miteinander verbunden, derart, daß im geschlossenen Zustand die Tasche (105, 106) flachliegend zwischen dem Deckelfeld (103) und dem Rückenfeld (104) aufgenommen und im geöffnete Zustand die Tasche (105, 106) gegenüber einer Ebene, die durch das Rückenfeld (104) und das um 180° aufgeklappte Deckelfeld (103) definiert ist, um einen Schwenkwinkel (S) herausgehoben ist. Eine besonders gute Zugänglichkeit des Verpackungsgutes ist damit erreicht.

## Beschreibung

Die Erfindung betrifft eine aus einem einstückigen Faltzuschnitt hergestellte Verpackung, insbesondere eine Verkaufs-und Archivierverpackung für CD's, gemäß Oberbegriff des Anspruchs 1.

Derartige Verpackungen sind speziell für plattenförmiges Verpackungsgut, z. B. Compakt-Disketten (CD), EDV-Disketten, Tafeln oder Bilder, geeignet. Sie besitzen ein Deckelfeld und ein mit diesem über eine Rillinie verbundenes Rückenfeld sowie eine mit einer Einschuböffnung versehene Tasche, die zwischen dem Deckelfeld und dem Rückfeld angeordnet ist. Eine solche Verpackung läßt sich besonders kostengüstig aus einem einstückigen Faltzuschnitt aus Karton oder aus einem vergleichbaren Kunststoffmaterial (z. B. Vinyl) fertigen und gewinnt daher zusehends an Bedeutung gegenüber den bislang verwendeten Verpackungen aus spritzgegossenem Kunststoff, wie sie beispielsweise als sogenannte Jewel-Box für CD's weit verbreitet sind.

Nachteilig bei den bisher bekannten Verpackungen der eingangs genannten Art ist die vergleichsweise umständliche Handhabung beim Herausnehmen bzw. Einsetzen des Verpackungsgutes, da dieses schlecht zugänglich ist. Dies liegt u. a. auch darin begründet, daß der Zuschnitt der Tasche bewußt knapp gewählt ist, um ein unbeabsichtigtes Herausgleiten des Verpackungsgutes zu verhindern.

Der vorliegenden Erfindung lag daher das Problem zugrunde, eine Verpackung der eingangs genannten Art derart weiterzuentwickeln, daß sie die genannten Nachteile nicht mehr aufweist. Insbesondere sollte eine Verpackung geschaffen werden, die als Verkaufs- und Archivierverpackung für CD's und dgl. ein einfaches Herausnehmen und Einschieben des Verpackungsgutes und dessen sichere und staubgeschützte Aufbewahrung ermöglicht. Gleichzeitig sollte ein ästhetisches Gesamterscheinungsbild erreicht werden, um auch hochgestellten Qualitätsanforderungen gerecht zu werden.

Das Problem wird mit einer Verpackung gelöst, die die Merkmale des Anspruchs 1 aufweist. Vorteilhafte Ausführungsvarianten sind durch die Merkmale der Unteransprüche angegeben.

Die Erfindung beruht auf der Idee, eine Tasche auszubilden, die das Verpackungsgut in weiten Bereichen umschließend aufnimmt und die beim Öffnen der Verpackung eine mit dem Deckelfeld gekoppelte Schwenkbewegung nach oben erfährt, so daß das Verpackungsgut in einer Art Abgabestellung bequem und schonend entnommen werden kann.

Konkret wird dies erreicht durch eine vordere und eine hintere Taschenplatte, die über eine Rillinie verbunden sind. Eine der beiden Taschenplatten ist mit dem Rückenfeld über eine weitere Rillinie schwenkbar verbunden, wobei gegenüberliegend zu dieser Rillinie eine Einschuböffnung für das Verpackungsgut gebildet ist. Die Einschuböffnung weist hierbei einwärts gerichtet auf den Falz hin, der zwischen dem Deckelfeld und dem Rückenfeld liegt. Weiterhin ist die hintere Taschenplatte mit dem Deckelfeld über Kopplungsmittel verbunden, so daß beim Aufklappen des Deckelfelds die Tasche aus einer flachliegenden Position heraus nach oben hin verschwenkt wird. Im vollständig geöffneten Zustand nimmt die Tasche gegenüber dem Rückenfeld eine schräg nach oben weisende Winkellage ein.

Beim Zuklappen des Deckelfelds sorgen die Kopplungsmittel für eine Rückkehrbewegung der Tasche in eine flachliegende Position, so daß sie im geschlossenen Zustand der Verpackung flachliegend zwischen dem Deckelfeld und dem Rückenfeld aufgenommen ist.

Hierdurch ist einerseits eine staubgeschützte und sichere Aufnahme des Verpackungsgutes im geschlossenen Zustand realisiert. Andererseits schwenkt das Verpackungsgut beim Öffnen der Verpackung durch die zwangsgekoppelte Bewegung der Tasche in eine Abgabeposition, so daß es besonders einfach und sicher ergriffen und aus der Tasche herausgenommen werden kann. Darüber hinaus ist das Aufnahmegut im geschlossenen Zustand gegen unbeabsichtigtes Herausgleiten dadurch gesichert, daß die Einschuböffnung zum Falz zwischen dem Deckelteil und dem Rückteil hin gerichtet ist.

Bevorzugt beträgt der (maximale) Schwenkwinkel, den die Tasche in Bezug auf das Rückenfeld einnehmen kann, zwischen ca. 5° und 30°, bevorzugt 15°. Ein derartiger Schwenkwinkel ermöglicht einerseits die optimale Zugänglichkeit zum Verpackungsgut, andererseits können die hierfür erforderlichen Kopplungsmittel besonders einfach gestaltet werden.

Bevorzugt bestehen die Kopplungsmittel zumindest aus einer Ausschwenkplatte und einem mit dieser über eine Rillinie schwenkbar verbundenen Abstandshalterstreifen. Die Ausschwenkplatte ist an der der Rillinie gegenüberliegenden Kante an der Innenseite des Deckelfelds angebracht. Der Abstandshalter ist an der der Rillinie gegenüberliegende Kante an der Außenseite der hinteren Taschenplatte schwenkbar befestigt. Somit wird bei einer Öffnungsbewegung des Deckelfelds die Ausschwenkplatte mitgezogen und stellt die Tasche über eine Faltbewegung mit dem Abstandshalter auf, welcher aus einem flachliegenden Zustand in eine im wesentlichen von dem Rückfenfeld senkrecht abstehende Position übergeht. Der Übergangsbereich von der Ausschwenkplatte zum Abstandshalterstreifen (Rillinie) gleitet hierbei innen an dem Rückenfeld bzw. an einer diese verstärkenden Versteifungsplatte entlang.

Bevorzugt ist der Abstandshalterstreifen mit einer Versteifungsplatte über eine Rillinie schwenkbar verbunden, wobei die Versteifungsplatte mit der hinteren Taschenplatte verbunden ist. Die Verbindung ist bevorzugt eine Klebeverbindung, die streifenförmig oder aber auch vollflächig realisiert sein kann. Die Versteifungsplatte übt hierbei gleichzeitig zwei Funktionen aus, da sie neben der Versteifung der hinteren Taschenplatte auch den Anlenkpunkt des Abstandshalterstreifens an der Tasche festlegt.

Ähnlich ist die bevorzugte Variante zu sehen, bei der die Ausschwenkplatte mit einer Versteifungsplatte über eine Rilllinie schwenkbar verbunden ist. Die Ausschwenkplatte geht gegenüberliegend zur Rillinie über eine weitere Rillinie in das Deckelfeld über und ist mit diesem verbunden, vorzugsweise ebenfalls verklebt. Die Rillinie zwischen der Ausschwenkplatte und der Versteifungsplatte legt damit den Anlenkpunkt der Ausschwenkplatte in Bezug auf das Deckelfeld fest. Bevorzugt ist die Rillinie zwischen der Ausschwenkplatte und der Versteifungsplatte derart positioniert, daß der hierdurch gebildete Falz im geschlossenen Zustand als Sicherung für das in der Tasche eingesetzte Verpackungsgut dient, also an diesem gegebenenfalls mit etwas Spiel anliegt und somit eine unbeabsichtigte Lageänderung des Verpackungsgutes in Bezug auf die Tasche zuverlässig verhindert.

Gemäß einer weiteren bevorzugten Variante ist die Rillinie zwischen Ausschwenkplatte und Versteifungsplatte variabel festlegbar und somit auf Verpackungsgut unterschiedlichen Ausmaßes exakt abstimmbar.

Für eine besonders einfache Handhabung des Verpackungsgutes sind in der vorderen und in der hinteren Tascheplatte Aussparungen vorgesehen, die sich ausgehend von einem jeweils mittleren Bereich zu den offenen Kanten hin erstrecken. Damit kann beispielsweise eine CD im zentralen Bereich von beiden Seiten zwischen Daumen und Zeigefinger erfaßt werden, ohne die informationstragenden Bereiche berühren zu müssen. Hierbei ist es von Vorteil, wenn die vordere, d. h. nach oben hin weisende Taschenplatte gegenüber der hinteren Taschenplatte etwas weiter ausgeschnitten ist, so daß einerseits eine Einführhilfe durch Aufsetzen des Verpackungsgutes auf die hintere Taschenplatte realisiert ist. Andererseits erlaubt die größere Aussparung auf der vorderen Taschenplatte eine gute Erkennbarkeit von gegebenenfalls auf dem Verpackungsgut aufgebrachten Produktinformationen. Diese Ausparung kann darüber hinaus konturangepaßt zu weiteren Ausparungen des Deckelfelds und der Versteifungsplatte gestaltet sein, so daß eine Art Sichtfenster gebildet wird, durch das das Verpackungsgut auch im geschlossenen Zustand der Verpackung erkennbar ist.

Für eine weitgehend staubdichte Ausführung eines solchen Sichtfensters kann zwischen dem Deckelfeld und dessen Versteifungsplatte eine Klarsichtfolie angebracht werden.

Zur Schonung des Verpackungsgutes kann die hintere Taschenplatte einen erhaben geprägten Auflagebereich besitzen. Damit ist es möglich beispielsweise eine CD lediglich im Mittenbereich zu unterstützen, so daß die informationstragenden Außenbereiche weitgehend berührungsfrei zur hinteren Taschenplatte und damit sicher vor unbeabsichtigten Beschädigungen der Oberfläche aufgenommen sind. Ein solcher Auflagebereich läßt sich besonders einfach durch sogenanntes Tiefprägen formen.

Gemäß einer weiteren Ausführungsvariante ist im Bereich des Deckelfeldes eine Verschlußlasche gebildet, die mit einem korrespondierend hierzu gestalteten Einsteckschlitz zusammenarbeitet, der an der vorderen Taschenplatte eingeschnitten ist. Die Verschlußlasche ist im Bereich der Rillinie zwischen dem Deckelfeld und der Versteifungsplatte freigestanzt. Hierbei kann in symmetrischer Ausbildung zur Rillinie die Verschlußlasche sowohl am Deckelfeld als auch an der Versteifungsplatte ausgebildet und nach dem Falten zusammengeklebt sein. Gemäß einer vereinfachten Variante ist die Verschlußlasche lediglich am Deckelfeld vorgesehen, wohingegen an der Versteifungsplatte lediglich eine Freistanzung angebracht ist.

Weitere Ausführungsformen betreffen Maßnahmen, um die Verpakkung auch bei eingesetztem Verpackungsgut so zu gestalten, daß das Deckel- und das Rückenfeld in geschlossenem Zustand parallel zueinander liegen. Hierzu ist einerseits zwischen dem Deckelfeld und dem Rückenfeld ein Ausgleichsfeld mit einer zusätzlichen Rillinie vorgesehen, andererseits ist gegenüberliegend zwischen dem Rückenfeld und der angrenzenden Taschenplatte ein weiteres Ausgleichsfeld mit einer zusätzlichen Rillinie angeordnet. Die Höhe der Ausgleichsfelder ist so gewählt, daß sie in Abstimmung auf die Wanddicken des Faltzuschnitts und die Höhe des Verpackungsgutes einen korrespondierenden Ausgleich schaffen. Ein Verspannen der Verpackung bzw. eine Wölbung im Deckelfeld sind damit zuverlässig vermieden.

In bevorzugter Weiterführung der Erfindung ist aus der Versteifungsplatte und dem Abstandshalterstreifen eine Sicherungslasche ausgeschnitten und über eine Rillinie mit der Auschwenkplatte schwenkbar verbunden. Diese Rillinie ist ein Teil derjenigen Rillinie, die zwischen der Ausschwenkplatte und dem Abstandshalterstreifen verläuft. Am auslaufenden, freien Ende der Sicherungslasche ist eine Zunge ausgebildet, so daß durch den an einer weiteren Rillinie gebildeten Falz eine Arretierung des Verpackungsgutes gegen Verrutschen im geschlossenen Zustand der Verpackung erreicht ist.

Zur Erhöhung der Stabilität können zusätzliche Versteifungsplatten angebracht sein, beispielsweise eine Versteifungsplatte für das Rückenfeld.

Weitere bevorzugte Weiterbildungen sehen eine an das Deckelfeld angrenzende Lasche vor, die zur Bildung einer Tasche eingeklappt und an der gegenüberliegenden Seite fixiert werden kann. Die Höhe und Breite dieser Lasche können in Abhängigkeit des vorgesehenen Verwendungszwecks unterschiedliche Abmessungen erhalten. Beispielsweise kann die Lasche weitgehend die Abmessungen des Deckelfeldes bzw. deren Versteifungsplatte erreichen, so daß eine Tasche zum Einlegen eines Blatts mit Produktsinformationen entsteht. Die Lasche kann auch über eine Perforationslinie mit dem Deckelfeld verbunden sein, so daß ein Abtrennen leicht möglich ist. In diesem Fall kann die Lasche bedruckt sein und beispielsweise als Karteikarte dienen.

Aus dem vorstehenden ergibt sich, daß eine kostengünstig herstellbare Verpackung zu realisieren ist, auf der mit geringem zusätzlichen Aufwand Produktinformationen aufgebracht, beispielsweise aufgedruckt werden können.

Die Erfindung wird näher anhand der in den Figuren schematisch dargestellten Ausführungsbeispiele erläutert. Es zeigen
- Fig. 1:: einstückiger Faltzuschnitt für eine Verpackung,
- Fig. 2:: Verpackung in perspektivischer Ansicht und
- Fig. 3:: Variante des Faltzuschnitts gemäß Fig. 1.

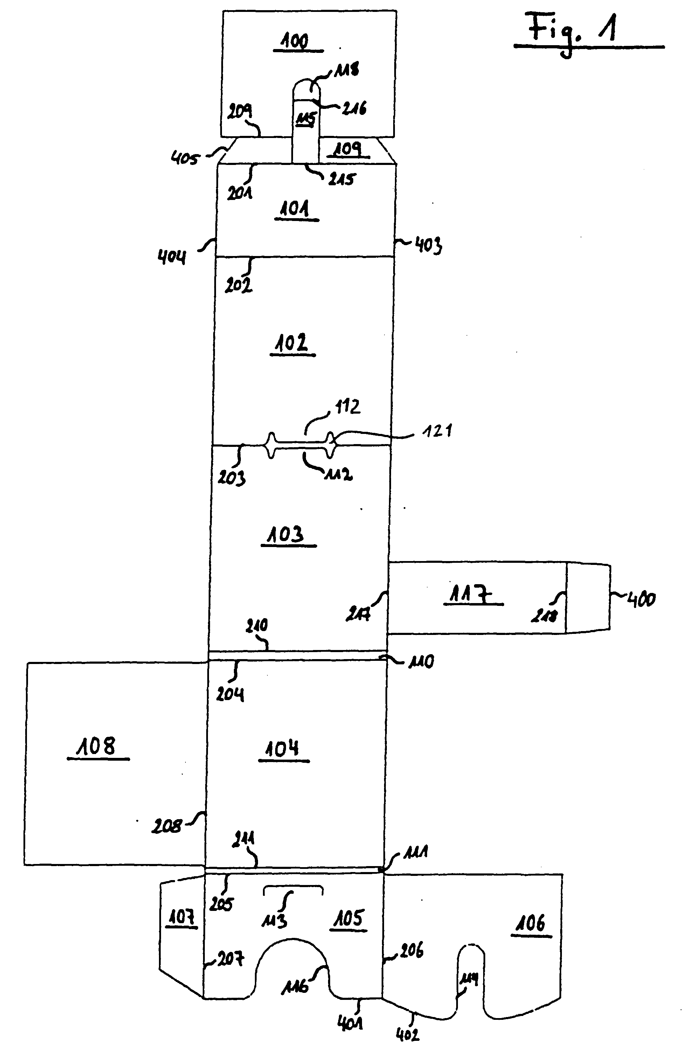

Der in Fig. 1 dargestellte Faltzuschnitt weist eine Versteifungsplatte für eine hintere Taschenplatte 106 auf, an welche sich über eine Rillinie 209 ein Abstandshalterstreifen 109 anschließt, der seinerseits über eine Rillinie 201 mit einer Ausschwenkplatte 101 verbunden ist. Aus der Versteifungsplatte 100 und dem Abstandshalterstreifen 109 ist eine Sicherungslasche 115 einschließlich einer Zunge 118 herausgeschnitten. Die Sicherungslasche 115 ist über eine Rillinie 215 mit der Ausschwenkplatte 101 beweglich verbunden. Gegenüberliegend befindet sich eine Rillinie 216, die den Übergang zur Zunge 118 darstellt. Der Abstandshalterstreifen 109 ist mit schräg einwärts verlaufenden Kanten 405 versehen, um eine ungehinderte Faltbewegung im fertigen Zustand der Verpackung zu erleichtern.

An die Ausschwenkplatte 101 schließt sich über ein Rillinie 202 eine Versteifungsplatte für ein nachfolgend angeordnetes Deckelfeld 103 an, wobei zwischen der Versteifungsplatte 102 und dem Deckelfeld 103 wiederum eine Rillinie 203 angeordnet ist. Die Position der Rillinie 202 ist prinzipiell variabel wählbar und richtet sich nach der Größe des Verpackungsgutes, da der an dieser Rillinie 202 gebildete Falz eine Sicherungsfunktion ausübt.

Im Bereich der Rillinie 203 ist in symmetrischer Ausgestaltung eine Ausparung 121 vorgesehen, die nach dem Verkleben des Deckelfeldes mit der Versteifungsplatte 102 eine stabile Verschlußlasche 112 entstehen läßt.

Seitlich am Deckelfeld 103 schließt sich über eine Perforationslinie 217 eine Lasche 117 an, die eine Rillinie 218 zur Bildung eines Fixierabschnitts trägt.

Am Übergang zwischen dem Deckelfeld 103 und einem Rückenfeld 104 ist über Rillinien 204, 210 ein Ausgleichsstreifen 110 vorgesehen, der als Abstandsausgleich zur Erreichung einer planparallelen Lage von Deckelfeld 103 und Rückenfeld 104 dient. Seitlich am Rückenfeld 104 ist eine Versteifungsplatte 108 über eine Rillinie 208 verbunden, die mit dem Rückenfeld 104 verklebt wird.

An das Rückenfeld 104 schließt sich die vordere Taschenplatte 105 an, wobei wiederum als Abstandsausgleich ein Ausgleichsstreifen 111 mit Rillinien 205, 211 vorhanden ist.

Seitlich an der vorderen Taschenplatte 105 ist über eine Rilllinie 206 die hintere Taschenplatte 106 angebracht, gegenüberliegend befindet sich eine Klebelasche 107, die um eine Rillinie 207 gefaltet und mit der hinteren Taschenplatte 106 verklebt wird.

In die vordere Taschenplatte 105 ist ein Einsteckschlitz 113 eingeschnitten, der mit der Verschlußlasche 112 des Deckelfeldes 113 zusammenwirkt.

Aus der vorderen Taschenplatte 105 und der hinteren Taschenplatte 106 sind Aussparungen 114, 116 ausgestanzt, die ausgehend von einem mittleren Bereich zu nach außen weisenden Kanten 401, 402 verlaufen und somit Grifföffnungen für das hier nicht dargestellte Verpackungsgut bilden.

Weitere Felder oder Laschen können insbesondere längs Kanten 400, 403, 404 vorgesehen sein, die mit Hilfe von Perforationen abreißbar zu gestalten sind und verschiedenen Zwecken, wie beispielsweise der Preisinformation oder als Karteikarte, dienen.

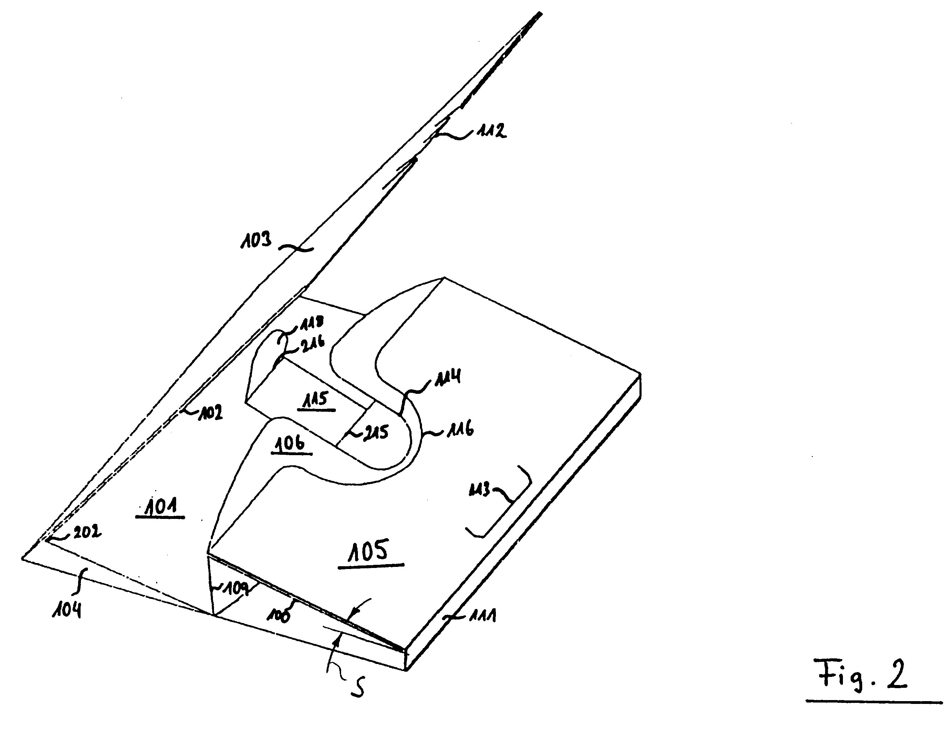

Die in Fig. 2 dargestellte perspektivische Ansicht der fertiggestellten Verpackung soll die Funktion zusätzlich verdeutlichen. Beim Schließen des Deckelfeldes 103 wird die Ausschwenkplatte 101, die mit der Versteifungsplatte 102 verbunden ist, welche wiederum mit dem Deckelfeld 103 verklebt ist, gemäß Darstellung in Fig. 2 nach rechts geschoben und verschiebt dabei den Abstandshalterstreifen 109 unter die Versteifungsplatte 100, die mit den die Tasche bildenden Taschenplatten 105, 106 sowie der Versteifungsplatte 110 verbunden ist.

Hierbei legt sich die Tasche an die Versteifungsplatte 108 des Rückenfelds 104 an. Die Festlegung der Rillinie 202 zwischen der Ausschwenkplatte 101 und der Versteifungsplatte 102 erfolgt derart, daß eine Arretierung des Verpackungsgutes im geschlossenen Zustand der Verpackung gesichert ist. Gleichzeitig wird die ergänzend mit der Ausschwenkplatte 101 beweglich verbundene Sicherungslasche 115 in dieselbe Richtung gezogen und arretiert bei geschlossener Verpackung mit der an ihrem freien Ende über die Rillinie 216 abgeknickte Zunge 118 zusätzlich das Verpackungsgut.

Nach dem Zuklappen des Deckelfeldes 103 (einschließlich der damit verbundenen Versteifungsplatte 102) wird die Verschlußlasche 112 in den Einsteckschlitz 113 eingeführt und sichert damit die Verpackung im geschlossenen Zustand.

Die Öffnungsbewegung erfolgt in ungekehrter Richtung, wobei die Ausschwenkplatte 101 durch die Aufklappbewegung in der Darstellung gemäß Fig. 2 nach links gezogen wird. Mit ihr wird der Anlenkpunkt des Abstandshalterstreifen 109 (Rillinie 201) verlagert, so daß der Abstandshalterstreifen 109 aus einer flachliegenden Position heraus im wesentlichen senkrecht nach oben aufgestellt wird und damit die Tasche 100, 105, 106 nach oben drückt. Der hierdurch erreichte Schwenkwinkel S beträgt in etwa 15° und erlaubt somit eine optimale Zugänglichkeit des Verpackungsgutes.

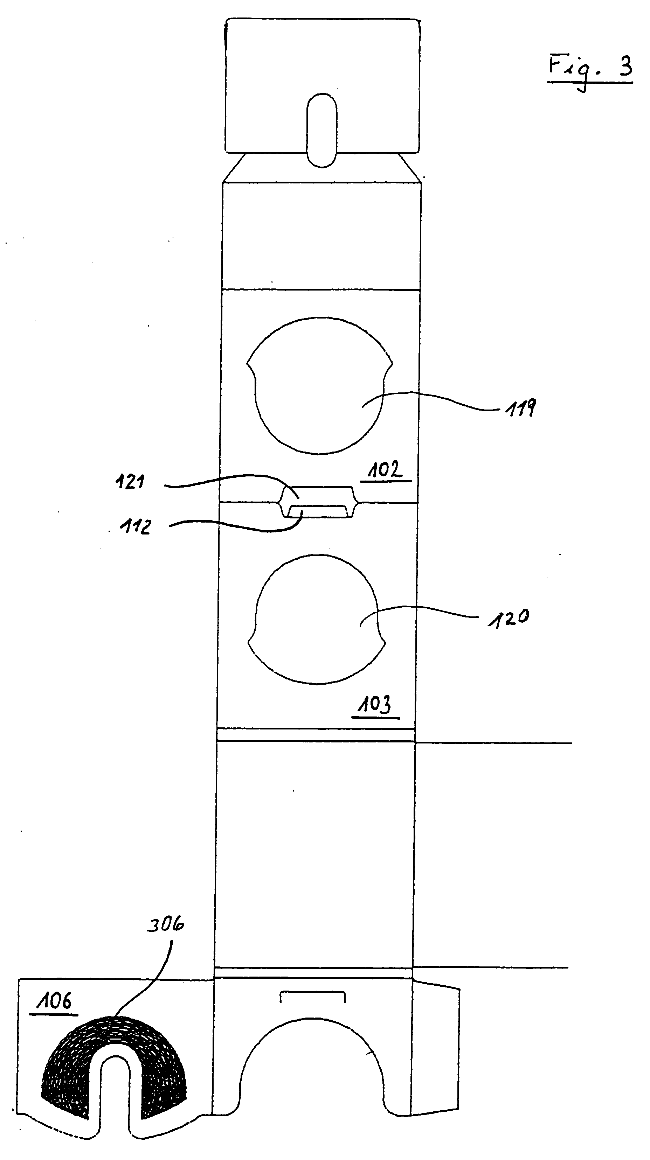

Der in Fig. 3 dargestellte Faltzuschnitt entspricht im wesentlichen demjenigen gemäß Fig. 1. Auf eine detaillierte Beschreibung wird somit verzichtet, lediglich wichtige Unterschiede werden erläutert.

Das Deckelfeld 103 und dessen Versteifungsplatte 102 weisen korrespondierend gestaltete Ausparungen 119, 120 auf, die als Sichtfenster für das Verpackungsgut dienen. Vor dem Zusammenfügen des Deckelteils 103 und der Versteifungsplatte 102 kann eine hier nicht dargestellte Klarsichtfolie angebracht werden, um weiterhin eine staubsichere Verpackung zu ermöglichen.

Eine weitere Modifikation bezieht sich auf die Gestaltung der Verschlußlasche 112, die lediglich auf dem Deckelfeld 103 ausgebildet ist. Die Ausparung 121 ist so gestaltet, daß auf der Seite der Versteifungsplatte 102 lediglich freigestanzt ist, so daß die Verschlußlasche 112 in diesem Bereich ungehindert bewegt werden kann.

Die hintere Taschenplatte 106 ist im mittleren Bereich tiefgeprägt, so daß ein Auflagebereich 306 für das Verpackungsgut entsteht. Somit liegt das Verpackungsgut lediglich in einem begrenzten Bereich auf, so daß Beschädigungen der Oberfläche praktisch ausgeschlossen sind.

### Bezugszeichenliste

- 100: Versteifungsplatte der hinteren Taschenplatte
- 101: Ausschwenkplatte
- 102: Versteifungsplatte des Deckelfeldes
- 103: Deckelfeld
- 104: Rückenfeld
- 105: vordere Taschenplatte
- 106: hintere Taschenplatte
- 107: Lasche
- 108: Versteifungsplatte des Rückenfeldes
- 109: Abstandshalterstreifen
- 110: Ausgleichstreifen
- 111: Ausgleichstreifen
- 112: Verschlußlasche
- 113: Einsteckschlitz
- 114: Aussparung
- 115: Sicherungslasche
- 116: Aussparung
- 117: Lasche
- 118: Zunge
- 119: Aussparung
- 120: Aussparung
- 121: Aussparung

- S: Schwenkwinkel

- 201: Rillinie
- 202: Rillinie
- 203: Rillinie
- 204: Rillinie
- 205: Rillinie
- 206: Rillinie
- 207: Rillinie
- 208: Rillinie
- 209: Rillinie
- 210: Rillinie
- 211: Rillinie
- 215: Rillinie
- 216: Rillinie
- 217: Perforationslinie
- 218: Rillinie (ggf. Perforation)

- 306: Auflagebereich

- 400: Kante
- 401: Kante
- 402: Kante
- 403: Kante (ggf. Perforation)
- 404: Kante (ggf. Perforation)
- 405: Kante

## Patentansprüche

1. Aus einem einstückigen Faltzuschnitt hergestellte Verpakkung, insbesondere Verkaufs- und Archivierverpackung für CD's,
mit
- einem Deckelfeld (103),
- einem Rückfenfeld (104), das mit dem Deckelfeld (103) über wenigstens eine Rillinie (204; 210) schwenkbar verbunden ist,
und
- einer mit einer Einschuböffnung versehenen Tasche (105, 106), die zwischen dem Deckelfeld (103) und dem Rückenfeld (104) angeordnet ist,
dadurch gekennzeichnet, daß
- die Tasche zumindest aus einer vorderen Taschenplatte (105) und einer mit dieser über eine Rillinie (206) verbundenen hinteren Taschenplatte (106) gebildet ist,
- die Einschuböffnung gegenüberliegend zur wenigstens einen Rillinie (204; 210) angeordnet ist,
- eine der beiden Taschenplatten (105; 106) mit dem Rückenfeld (104) über wenigstens eine Rillinie (205; 211) schwenkbar verbunden ist,
- die hintere Taschenplatte (106) und das Deckelfeld (103) über Kopplungsmittel (101, 109, 202) miteinander verbunden sind,
derart daß
im geschlossenen Zustand die Tasche (105, 106) flachliegend zwischen dem Deckelfeld (103) und dem Rückenfeld (104) aufgenommen
und
im geöffnete Zustand die Tasche (105, 106) gegenüber einer Ebene, die durch das Rückenfeld (104) und das um 180° aufgeklappte Deckelfeld (103) definiert ist, um einen Schwenkwinkel (S) herausgehoben ist.

2. Verpackung nach Anspruch 1, dadurch gekennzeichnet, daß der Schwenkwinkel (S) ca. 5° bis 30°, vorzugsweise 15° beträgt.

3. Verpackung nach Anspruch 1 oder 2, dadurch gekennzeichnet, daß die Kopplungsmittel zumindest eine Ausschwenkplatte (101) und einen mit dieser über eine Rillinie (202) schwenkbar verbundenen Abstandshalterstreifen (104) aufweisen, wobei die Ausschwenkplatte (101) an der der Rillinie (202) gegenüberliegenden Kante an der Innenseite des Deckelfelds (103) und der Abstandshalterstreifen (109) an der der Rillinie (202) gegenüberliegenden Kante an der Außenseite der hinteren Taschenplatte (106) schwenkbar befestigt sind.

4. Verpackung nach Anspruch 3, dadurch gekennzeichnet, daß der Abstandshalterstreifen (109) mit einer Versteifungsplatte (100) über eine Rillinie (209) schwenkbar verbunden ist, wobei die Versteifungsplatte (100) mit der hinteren Taschenplatte (106) verbunden, vorzugsweise verklebt ist.

5. Verpackung nach Anspruch 3 oder 4, dadurch gekennzeichnet, daß die Ausschwenkplatte (101) mit einer Versteifungsplatte (102) über eine Rillinie (202) schwenkbar verbunden ist, welche ihrerseits über eine Rillinie (203) in das Deckelfeld (103) übergeht und mit diesem flächig verbunden, vorzugsweise verklebt ist.

6. Verpackung nach einem der Ansprüche 3 bis 5, dadurch gekennzeichnet, daß die Rillinie (202) derart positioniert ist, daß im geschlossenen Zustand der an dieser Stelle gebildete Falz zwischen der Ausschwenkplatte (101) und der Versteifungsplatte (102) als Sicherung für in die Tasche (105, 106) eingesetztes Verpackungsgut dient.

7. Verpackung nach Anspruch 6, dadurch gekennzeichnet, daß die Rillinie (202) variabel festlegbar ist.

8. Verpackung nach einem der vorstehenden Ansprüche, dadurch gekennzeichnet, daß die vordere Taschenplatte (105) und die hintere Tachenplatte (106) Aussparungen (114, 116) aufweisen, die sich ausgehend von einem mittleren Bereich zu den offenen Kanten (401, 402) der Taschenplatten (105, 106) hin erstrecken.

9. Verpackung nach einem der Ansprüche 3 bis 9, dadurch gekennzeichnet, daß zur Bildung eines Sichtfensters für das Verpackungsgut das Deckelfeld (103) und die Versteifungsplatte (102) korrespondierende Aussparungen (119, 120) aufweisen.

10. Verpackung nach Anspruch 9, dadurch gekennzeichnet, daß zwischen dem Deckelfeld (103) und der Versteifungsplatte (102) zumindest im Bereich der das Sichtfenster bildenden Ansparungen (119, 120) eine Klarsichtfolie angebracht ist.

11. Verpackung nach einem der vorstehenden Ansprüche, dadurch gekennzeichnet, daß die hintere Taschenplatte (106) einen erhaben geprägten Auflagebereich (306) besitzt.

12. Verpackung nach einem der Ansprüche 3 bis 11, dadurch gekennzeichnet, daß zur Bildung einer Verschlußlasche (112) am Deckelfeld (103) und an der Versteifungsplatte (102) im Bereich der Rillinie (203) eine Aussparung (121) vorhanden ist, und daß korrespondierend hierzu an der vorderen Taschenplatte (105) ein Einsteckschlitz (113) angebracht ist.

13. Verpackung nach einem der vorstehenden Ansprüche, dadurch gekennzeichnet, daß zwischen dem Deckelfeld (103) und dem Rückenfeld (104) ein Ausgleichsfeld (110) mit einer zusätzlichen Rillinie (210) vorgesehen ist.

14. Verpackung nach einem der vorstehenden Ansprüche, dadurch gekennzeichnet, daß zwischen dem Rückenfeld (104) und der angrenzenden Taschenplatte (105 bzw. 106) ein Ausgleichsfeld (111) mit einer zusätzlichen Rillinie (211) vorgesehen ist.

15. Verpackung nach einem der Ansprüche 4 bis 14, dadurch gekennzeichnet, daß aus der Versteifungsplatte (100) und dem Abstandshalterstreifen (109) eine Sicherungslasche (115, 118) ausgeschnitten und über eine Rillinie (215) als Abschnitt der Rillinie (201) mit der Ausschwenkplatte (101) schwenkbar verbunden ist, und daß zur Bildung einer Zunge (118) eine Rillinie (216) angebracht ist.

16. Verpackung nach einem der vorstehende Ansprüche, gekennzeichnet durch eine Versteifungsplatte (108) für das Rückenfeld (104).

17. Verpackung nach einem der vorstehende Ansprüche, gekennzeichnet durch eine an das Deckelfeld (103) angrenzende Lasche (117).

18. Verpackung nach Anspruch 17, dadurch gekennzeichnet, daß zur Bildung eines Fixierabschnitts eine Rillinie (218) vorgesehen ist.

19. Verpackung nach Anspruch 17, dadurch gekennzeichnet, daß die Lasche (117) über eine Perforationslinie (217) mit dem Deckelfeld (103) verbunden ist.
